# EUROPEAN PATENT APPLICATION

(11) **EP 4 564 525 A1**
(43) Date of publication of application: **04.06.2025**
(21) Application number: 24198159.6
(22) Date of filing: 03.09.2024
(51) Int. Cl.: H01M 10/54, H01M 10/04, H01M 10/0587, H01M 50/406

(54) **METHOD FOR DISASSEMBLING ELECTRODE BODY**

(30) Priority: 29.11.2023 JP 2023201966
(71) Applicant: Prime Planet Energy & Solutions, Inc., Chuo-ku Tokyo 103-0022 (JP)
(72) Inventor: YOSHIOKA, Masahiro, Tokyo, 103-0022 (JP)
(74) Representative: Kuhnen & Wacker Patent- und Rechtsanwaltsbüro PartG mbB

(57) **Abstract**

There is provided a method for disassembling an electrode body (2) including a separator separating step (S 1) to separate the outermost separator (23 S) of the separators and the active material layer (KT2) at a boundary face (KM) with the active material layer (KT2) by extending the outermost separator so that an extension point (NP) is serially moved along the boundary face, a separator peeling step (S2) to peel off the outermost separator that has been separated from the active material layer in the separator separating step, and a disassembling step (S3) to disassemble a stacked state of the electrode body for each partial electrode (2XR) including the active material layer from which the outermost separator has been peeled off in the separator peeling step.

## Description

### BACKGROUND

### Technical Field

The disclosure relates to a method for disassembling an electrode body that is used for a power storage device.

### Related Art

For example, an electrode body of a lithium-ion battery (one example of a power storage device) is formed in a manner that a positive electrode body and a negative electrode body, each of which is formed by coating an active material layer on a metal foil, are respectively held by a separator and wound into a flat shape in a stacked and press-fitted state. When this electrode body is to be recycled or performed with performance evaluation, a stacked state of the electrode body needs to be disassembled by peeling off the separator on an outermost side from the active material layer.

However, the active material layer is generally only bonded to a surface of the metal foil via a binder material that binds mixtures. Accordingly, if the outermost separator is to try to be just peeled off from the active material layer, the active material layer could be separated from the metal foil and transferred to the separator.

To address this problem, for example, Patent Document 1 has disclosed a method for peeling a surface material from a stack body in which the surface material is stacked on a base material via an adhesive agent layer. Specifically, the method is characterized that a horn is brought into contact with the surface material to apply an ultrasonic wave vibration to the surface material via the horn to destruct the adhesive agent layer or deteriorate the adhesion so that the surface material is subsequently separated from the base material.

### Patent Documents

Patent Document 1: JP-A-2005-282165

### SUMMARY

### Technical Problems

In view of the above technique, for disassembling the stacked state of the above-mentioned electrode body, there is a possible method for separating the separator from the active material layer by applying ultrasonic wave vibration to the separator on the outermost side. However, in this method, there is a problem that, for example, the ultrasonic wave vibration applied to the separator separates the mixtures that have been bonded by the binding material in the active material layer and causes deformation and destruction in the active material layer of the electrode body to be disassembled.

The disclosure has been made in view of the above problem and has a purpose of providing a method for disassembling an electrode body used for a power storage device achieving reduction in transfer of an active material layer on a separator and achieving restraint of deformation, destruction, and others in the active material layer when a separator on an outermost side is to be peeled off from the active material layer.

### Means of Solving the Problems

(1) One aspect of the disclosure for solving the above problem is a method for disassembling an electrode body that is formed in a manner that a positive electrode body and a negative electrode body, each of which is formed by coating an active material layer on a metal foil, are held by separators, respectively, in a stacked and press-fitted state and that is used for a power storage device, the method comprising: separating an outermost separator of the separators from the active material layer at a boundary face with the active material layer by serially moving an extension point along the boundary face to extend the outermost separator; peeling the outermost separator, which has been separated from the active material layer in separating, from the active material layer; and disassembling a stacked state of the electrode body in each partial electrode including the active material layer from which the outermost separator has been peeled off in peeling.
(2) In the method for disassembling the electrode body described in the above (1), preferably, separating the outermost separator includes moving forward a rotation buff rotating at a predetermined peripheral speed in frictional contact with a surface of the outermost separator and extending the outermost separator in a tangential direction of the rotation buff.
(3) In the method for disassembling the electrode body described in the above (1) or (2), preferably, the separator is a resin film formed by extrusion molding; and separating the outermost separator includes extending the outermost separator in a transverse direction orthogonal to an extrusion direction of the resin film. Herein, the transverse direction represents a TD direction (specifically, TD represents a transverse direction) that is orthogonal to an MD direction (specifically, MD represents a machine direction) for extruding a resin material for a resin film.
(4) In the method for disassembling the electrode body described in any one of the above (1) to (3), preferably, separating the outermost separator, peeling the outermost separator, and disassembling are performed under no-water-use state and under inert atmosphere.

### BRIEF DESCRIPTION OF THE DRAWINGS

FIG. 1 is a schematic sectional view of a power storage device provided with an electrode body which is to be disassembled by a method for disassembling an electrode body according to one aspect of a present embodiment;
FIG. 2 is a schematic perspective view illustrating an electrode body in which a positive electrode body and a negative electrode body of the electrode body in FIG. 1 are respectively held by a separator and on the way of winding;
FIG. 3 is a sectional view of the power storage device, taken along an arrow A-A in FIG. 1;
FIG. 4 is a flowchart indicating a method for disassembling the electrode body in FIG. 1;
FIG. 5 is a schematic sectional view of the electrode body, taken along an arrow B-B in FIG. 1, illustrating a state in which an outermost separator and an active material layer are separated at their boundary faces by use of a rotation buff in a separator separating step shown in FIG. 4;
FIG. 6 is a sectional view taken along an arrow C-C in FIG. 5;
FIG. 7 is a schematic sectional view of the electrode body, taken along the arrow B-B in FIG. 1, illustrating a state in which the outermost separator is peeled off from the active material layer in a separator peeling step in FIG. 4; and
FIG. 8 is a schematic sectional view of the electrode body, taken along the arrow B-B in FIG. 1, illustrating a state in which a stacked state of the electrode body is disassembled in each partial electrode in which the outermost separator has been peeled off.

### DETAILED DESCRIPTION OF THE EXEMPLARY EMBODIMENTS

### <Explanation for Power Storage Device>

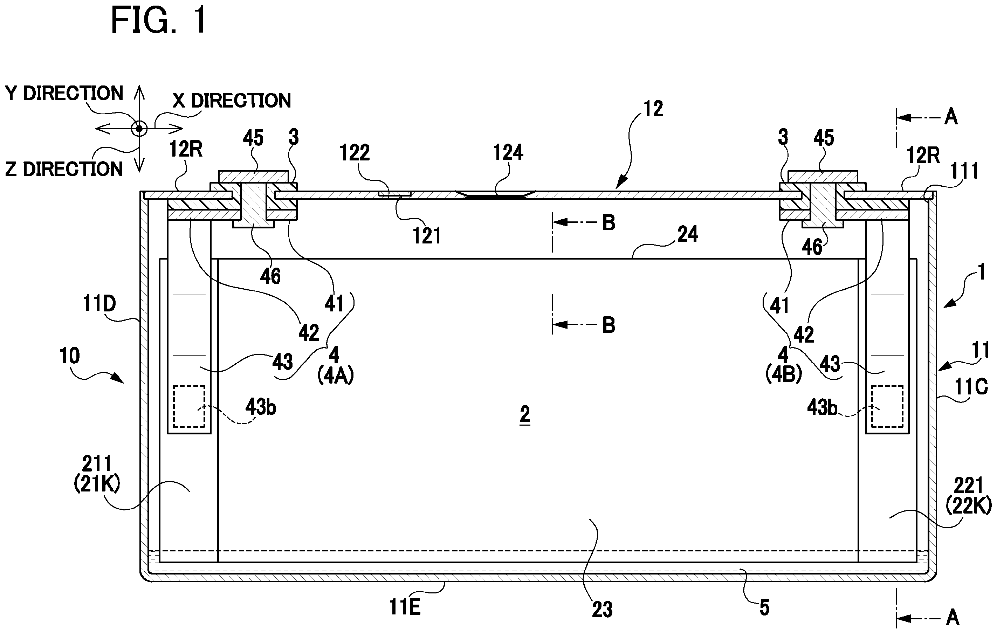

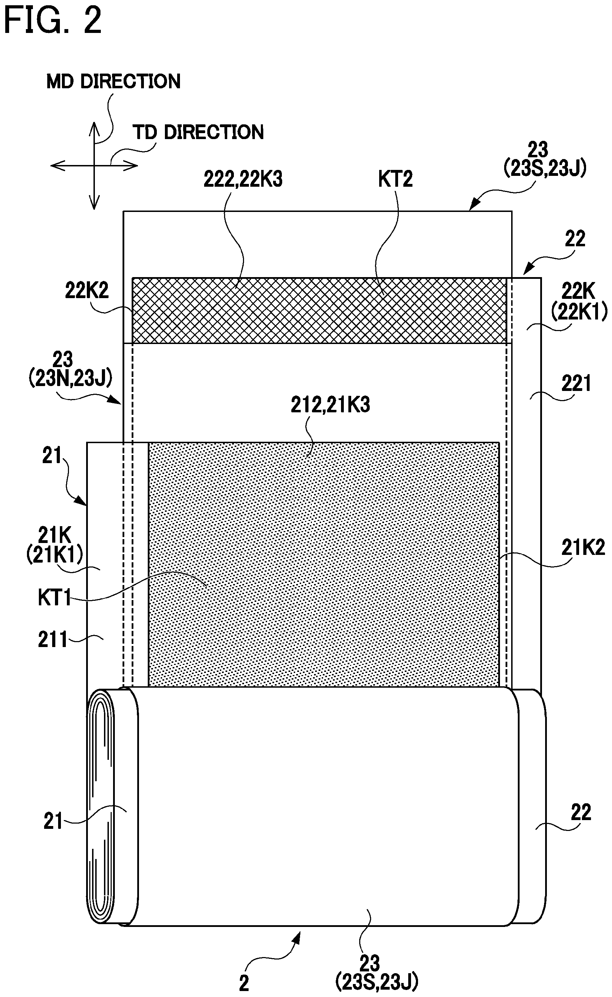

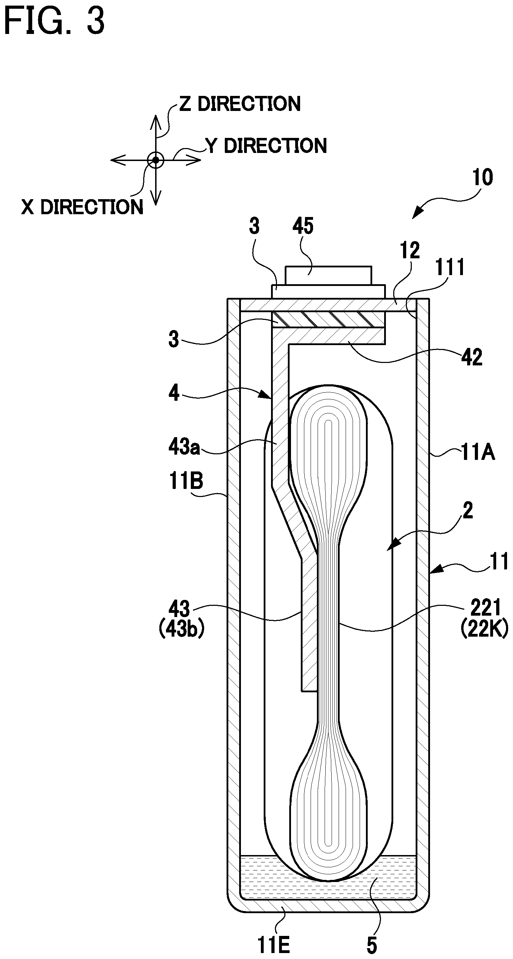

Next, a configuration of a power storage device provided with an electrode body which is yet to be disassembled by a method for disassembling an electrode body according to an embodiment of the above-mentioned disclosure is explained in detail with reference to the accompanying drawings. FIG. 1 is a schematic sectional view of a power storage device provided with an electrode body which is yet to be disassembled by the method of disassembling the electrode body according to one aspect of the present embodiment. FIG. 2 is a schematic perspective view of the electrode body, illustrating a state in which a positive electrode body and a negative electrode body of the electrode body shown in FIG. 1 are respectively held by a separator and on the way of winding. FIG. 3 is a sectional view of the power storage device, taken along an arrow A-A in FIG. 1. Herein, an X direction represents a longitudinal direction of a battery case accommodating the electrode body, a Y direction represents a short-side direction of the battery case, and a Z direction represents an upper and lower direction of the battery case.

A power storage device 10 provided with an electrode body 2 which is yet to be disassembled by the present method for disassembling the electrode body is, as shown in FIG. 1 to FIG. 3, provided with a battery case 1, the electrode body 2, collector terminals 4, and an electrolyte 5. One case wall portion 12 constituting the battery case 1 includes a liquid inlet 121 through which the electrolyte 5 is injected into the battery case 1, and a stopper 122 to seal the liquid inlet 121 by welding. The electrolyte 5 injected from the liquid inlet 121 is impregnated in the electrode body 2 and partially collected and kept near a bottom portion of the battery case 1. The thus collected and kept electrolyte 5 can be supplemented in the electrode body 2. Further, the one case wall portion 12 is provided with a safety valve 124 formed to open in accordance with increase in pressure inside the battery case 1. The power storage device 10 comprehends power storage devices in general which are able to extract electric energy, and includes a primary battery, a secondary battery, an electric double-layer capacitor, and others, for example.

In this explanation, the battery case is provided with a case body 11 in the form of a rectangular tube with a bottom and a rectangular opening portion 111, and a sealing body 12 in the form of a long flat-plate to seal the opening portion 111. The sealing body 12 corresponds to the one case wall portion 12. The case body 11 corresponds to the other case wall portion 11, which specifically includes long-side-surface wall portions 11A, 11B, short-side-surface wall portions 11C, 11D, and a bottom-surface wall portion 11E. The battery case 1 is made of aluminum or aluminum alloy, for example. Herein, the battery case 1 may only have to be formed hermetically inside, and is not limited to the above configuration.

Further, the electrode body 2 is housed in the battery case 1 in a manner that a positive electrode body 21 and a negative electrode body 22 are respectively held by a separator 23 in a stacked and press-fitted state. An outer peripheral surface of the electrode body 2 at least adjacent to the long-side-surface wall portions 11A, 11B is covered by the outermost separator 23 S to enhance insulation property to the battery case 1. The positive electrode body 21 and the negative electrode body 22 are formed with active-material-coated portions 212, 222 in which active material layers KT1, KT2 are coated on metal foils 21K, 22K, and active-material-uncoated portions 211, 221 in which the active material layers KT1, KT2 are not coated on one end portions 21K1, 22K1 of the metal foils 21K, 22K, respectively.

The active-material-uncoated portion 211 of the positive electrode body 21 and the active-material-uncoated portion 221 of the negative electrode body 22 are located opposite each other in the longitudinal direction (i.e., the X direction) of the battery case 1. The active-material-coated portions 212, 222 are respectively formed on the other end portions 21K2, 22K2 and intermediate portions 21K3, 22K3 of the metal foils 21K, 22K. Herein, the electrode body 2 is formed in a manner that the positive electrode body 21 and the negative electrode body 22 are respectively stacked with separators 23 interposed therebetween, and wound into a flat shape. Alternatively, a sheet-like positive electrode body 21 and a sheet-like negative electrode body 22 may be held by a sheet-like separator 23 and stacked in a flat shape.

For example, in a lithium-ion secondary battery as one example of the power storage device 10, the metal foil 21K of the positive electrode body 21 may adopt an aluminum foil, for example, and the active material layer KT1 coated thereon may adopt lithium transition metal oxide (LiNi_{1/3}Co_{1/3}Mn_{1/3}O₂, LiNiO₂, and others), for example. Further, the metal foil 22K of the negative electrode body 22 may adopt a copper foil, for example, and the active material layer KT2 to be coated thereon may adopt graphite, hard carbon, soft carbon, and others, for example.

Further, as the separator 23, for example, a porous resin film made of polypropylene (PP) resin, polyethylene (PE) resin, and others may be used. Both surfaces of the separator 23 are preferably provided with a ceramics layer of alumina or the like and a binder layer of polyvinylidene difluoride (PVDF) or the like. Herein, a front-surface side of the outermost separator 23S that is in close contact with the battery case 1 is preferably applied with less adhesive agent than a rear-surface side. Owing to this, on the way of accommodating the electrode body 2 into the battery case 1, failure of adhering the electrode body 2 to an inner wall of the battery case 1 is easily avoided. As the electrolyte 5, well-known non-aqueous electrolyte (for example, electrolyte including LiPF₆ salt and formed of ethylene carbonate (EC), dimethyl carbonate (DMC), ethyl methyl carbonate (EMC)) may be used.

Further, the collector terminal 4 includes a positive collector terminal 4A and a negative collector terminal 4B. The positive collector terminal 4A is made of aluminum, for example, and the negative collector terminal 4B is made of copper, for example. The positive and negative collector terminals 4 (4A, 4B) are each provided with a base portion 41, a base adjacent portion 42, and a lead portion 43 which are formed integrally. Herein, the base portion 41 is joined to a rear-surface side of a both-end portion 12R of the sealing body (the one case wall portion) 12 in the longitudinal direction (the X direction) with interposed with an insulating member 3, but the configuration is not limited to this. For example, the base portion 41 may be joined to the rear-surface side of the both-end portion of the case body (the other case wall portion) 11 in the longitudinal direction (the X direction) via the insulating member 3.

Further, the base adjacent portion 42 is adjacent to the base portion 41 and is in contact with the insulating member 3. In this embodiment, the lead portion 43 is bent toward a case lower direction (a Z direction) from the base adjacent portion 42 at a position of a lead upper end portion 43a on an upper part of the case. The metal foils 21K, 22K on the active-material non-coated portions 211, 221 of the electrode body 2 are welded and electrically connected to a lead lower end portion 43b on a case lower part of the lead portion 43 in an overlapped state (a foil collected state).

The base portion 41 is, for example, joined to an outer connecting portion 45 positioned on the both-end portion 12R in the longitudinal direction on the surface 12a side of the sealing body (the one case wall portion) 12 by a caulking pin 46 or the like. The insulating member 3 serving as a sealing member is also interposed between the caulking pin 46, the outer connecting portion 45, and the sealing body (the one case wall portion) 12. As the insulating member 3, for example, polyphenylenesulfide (PPS) resin may be used. To the outer connecting portion 45, a bus bar (not shown) for coupling is connected when a plurality of the power storage devices 10 are connected. Further, the outer connecting portion 45 may be integrally formed with the base portion 41. In this case, the sealing body (the one case wall portion) 12, the outer connecting portion 45, and the base portion 41 may be insert molded to the insulating member 3.

### <Method for Disassembling Electrode Body>

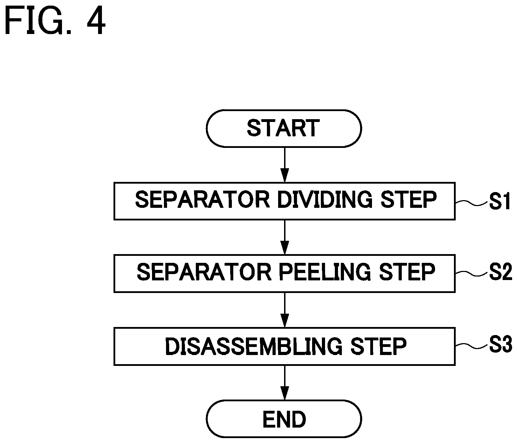

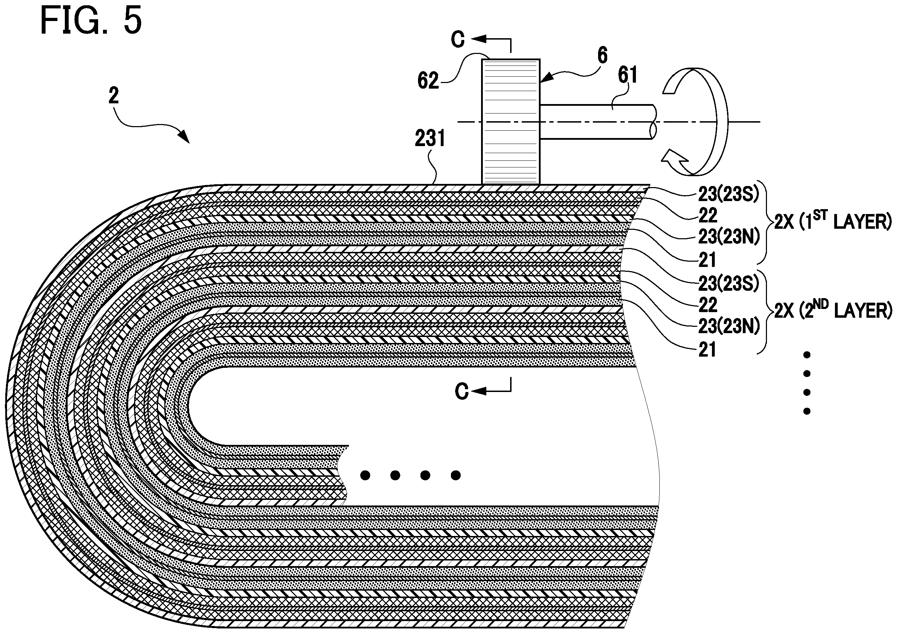

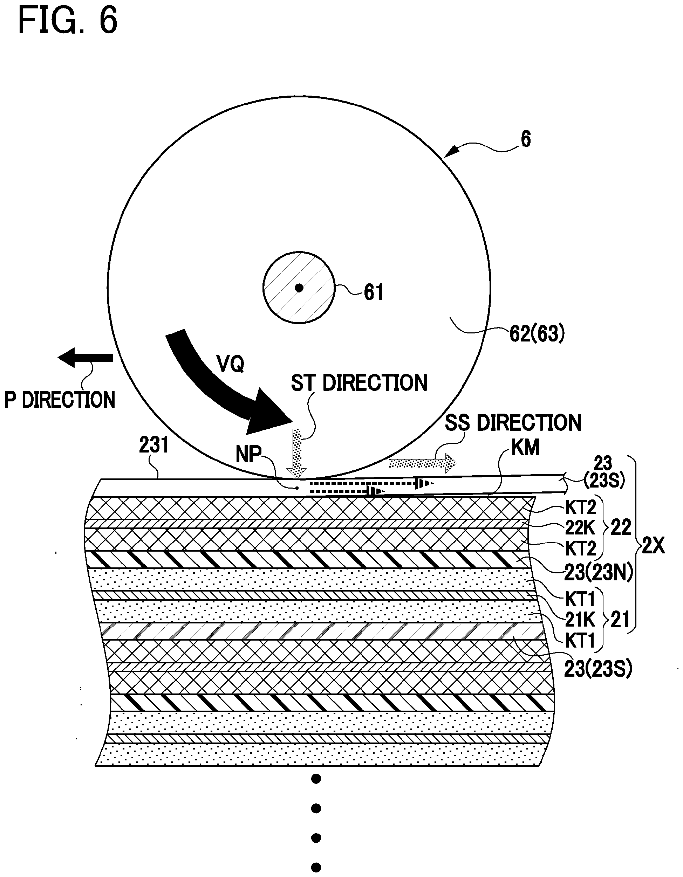

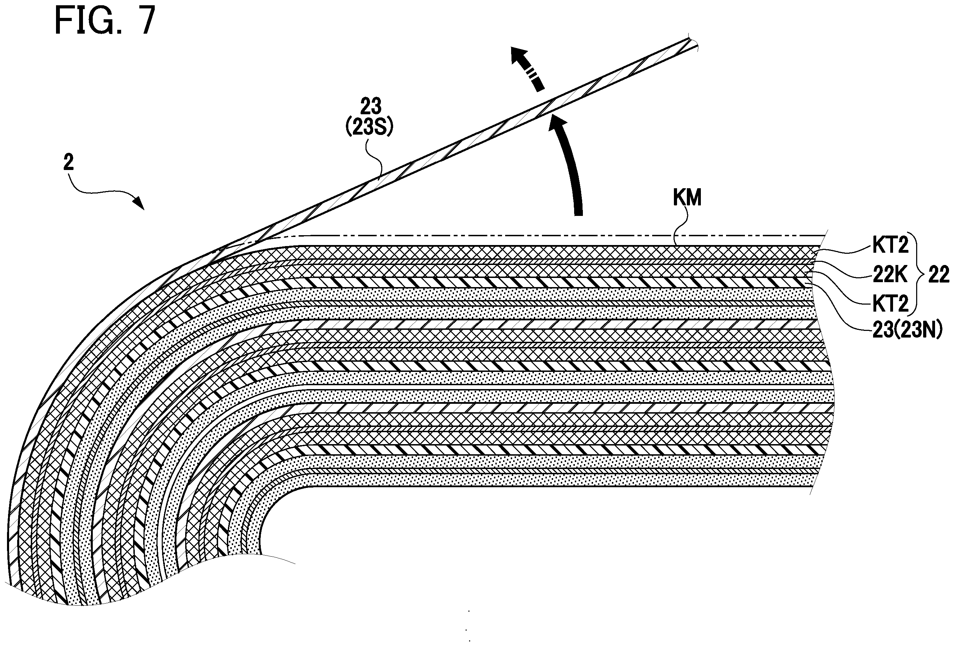

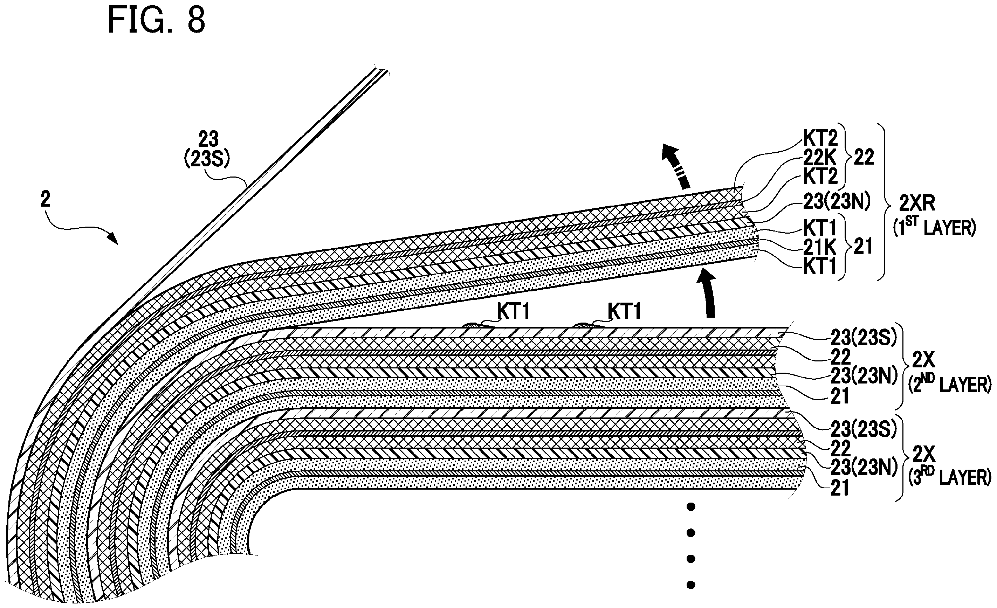

Next, a method for disassembling an electrode body according to the embodiment of the above-mentioned disclosure is explained in detail with reference to the accompanying drawings. FIG. 4 is a flowchart indicating a method for disassembling an electrode body shown in FIG. 1. FIG. 5 is a schematic sectional view of the electrode body, taken along an arrow B-B in FIG. 1, illustrating a state in which an outermost separator and an active material layer are separated at their boundary faces by use of a rotation buff in a separator separating step in FIG. 4. FIG. 6 is a sectional view taken along an arrow C-C in FIG. 5. FIG. 7 is a schematic sectional view of the electrode body, taken along the arrow B-B in FIG. 1, illustrating a state in which the outermost separator is peeled off from the active material layer in the separator peeling step. FIG. 8 is a schematic sectional view taken along the arrow B-B, illustrating a state in which a stacked state of the electrode body is disassembled for each partial electrode, in which the outermost separator has been peeled off, in a disassembling step in FIG. 4.

The method for disassembling the electrode body 2 is a method for disassembling the electrode body 2 that has been formed by stacking and press-fitting the positive electrode body 21 and the negative electrode body, in which the active material layers KT1, KT2 are coated on the metal foils 21K, 22K and the separator 23 is held therebetween, to be used for the power storage device 10. As shown in FIG. 4, the method includes a separator separating step S1, a separator peeling step S2, and a disassembling step S3. The electrode body 2 to be disassembled is taken out of the battery case 1, and then the positive and negative collector terminals 4 (4A, 4B) are separated in advance from the metal foils 21K, 22K.

Herein, as shown in FIG. 5, FIG. 6, FIG 8, the electrode body 2 is formed of partial electrodes 2X stacked in a plurality of times, and each unit of the partial electrode 2X is formed of the outermost separator 23S, the negative electrode body 22 in which the negative active material layers KT2 are coated on both surfaces of the metal foil 22K, an intermediate separator 23N, and the positive electrode body 21 in which the positive active material layers KT1 are coated on both surfaces of the metal foil 21K. However, the electrode body 2 is not necessarily limited to the above configuration and may be formed by, for example, stacking the partial electrodes 2X, each of which is formed of the outermost separator 23S, the positive electrode body 21 in which the positive active material layers KT1 are coated on both surfaces of the metal foil 21K, the intermediate separator 23N, and the negative electrode body 22 in which the negative active material layers KT2 are coated on both surfaces of the metal foil 22K for a plurality of times.

The separator separating step S1 is, as shown in FIG. 6, a step of separating the outermost separator 23S and the active material layer KT2 (KT1) at a boundary face KM by extending the outermost separator 23S of the separator 23 such that an extension point NP serially moves along the boundary face KM with the active material layer KT2 (KT1). In this case, the outermost separator 23S causes a local misalignment with respect to the active material layer KT2 (KT1) in a minute area of the extension point NP. By this local misalignment of the outermost separator 23S, the separator 23S and the active material layer KT2 (KT1) are separated at a bonded portion (for example, an adhesion layer). This separation at the bonded portion (the adhesion layer or the like) gradually proceeds along the boundary face KM, and thus there is less burden taken on the active material layer KT2 (KT1). Accordingly, the outermost separator 23S and the active material layer KT2 (KT1) can be separated without causing much burden on the active material layer KT2 (KT1). Further, a local misalignment amount of the outermost separator 23S does not exceed an extension limit of the separator 23S but exceeds an extension limit of the bonded portion (the adhesion layer or the like) bonding the separator 23S and the active material layer KT2 (KT1).

Subsequently, the separator peeling step S2 is, as shown in FIG. 7, a step of peeling off the outermost separator 23S, which has been separated from the active material layer KT2 (KT1) in the separator separating step S1, from the active material layer KT2 (KT1). In this case, the outermost separator 23S and the active material layer KT2 (KT1) have already been separated at the boundary face KM, and thus transfer of the active material layer KT2 (KT1) to the outermost separator 23S can be reduced when the outermost separator 23S is peeled off from the active material layer KT2 (KT1). Therefore, a state of the active material layer KT2 (KT1) can be maintained as it is before peeling of the separator, thereby restraining deformation and damage of the active material layer KT2 (KT1).

Further, the disassembling step S3 is, as shown in FIG. 8, a step of disassembling a stacked state of the electrode body 2 in each partial electrode 2XR including the active material layer KT2 (KT1) from which the outermost separator 23S has been peeled off in the separator peeling step S2. In this example, every unit of the partial electrode 2XR including the negative electrode body 22 in which the negative active material layer KT2 is coated, the intermediate separator 23N, and the positive electrode body 21 in which the positive active material layer KT1 is coated, is disassembled. In this case, deformation and breakup of the negative active material layer KT2, intrusion of the separator 23S, and others can be reduced. Further, the disassembled partial electrode 2XR includes the negative active material layer KT2 and the positive active material layer KT1, both of which are exposed, and thus each of the active material layers KT2, KT1 can be easily collected, and thus performance evaluation of the active material layers KT2, KT1 (for example, external appearance evaluation, charge and discharge performance evaluation by forming a small cell, and others) can be easily conducted. Herein, the partial electrode 2XR to be disassembled is not limited to the above configuration, and for example, the electrode body may be disassembled to a partial electrode formed only of the negative electrode body 22 coated with the negative active material layer KT2 from which the outermost separator 23S has been peeled off.

As explained in detail above, according to the method for disassembling the electrode body 2, when the outermost separator 23S is to be peeled off from the active material layer KT2 (KT1) in the electrode body 2 used for the power storage device 10, the active material layer KT2 (KT1) transferred to the separator 23S can be reduced, and deformation and breakup of the active material layer KT2 (KT1) from which the separator 23S has been peeled off can be restrained. Accordingly, the active material layers KT2, KT1 can be easily collected, and the performance evaluation of the active material layers KT2, KT1 can be easily performed.

In the method for disassembling the electrode body 2, the separator separating step S1, the separator peeling step S2, and the disassembling step S3 are preferably performed under no water use state and under inert atmosphere. This is for the purpose of avoiding creation of corrosive material, poisonous material, and others such as hydrofluoric acid by the reaction of water with fluorine salt such as LiPF₆ salt when the electrode body 2 to be disassembled includes components of the electrolyte 5, specifically, fluorine salt such as LiPF₆ salt. No water state and the inert atmosphere can be formed for example, in a glovebox in which inert gas (for example, Ar gas or the like) having a dew point of -50°C is contained, and accordingly, the method for disassembling the electrode body 2 is preferably performed in the above-mentioned glovebox.

Further, in the method for disassembling the electrode body 2, the separator separating step S1 is preferably performed in such a manner that the rotation buff 6 rotating at a predetermined peripheral speed VQ moves forward in frictional contact with a surface 231 of the outermost separator 23 S as shown in FIG. 5 and FIG. 6, to extend the separator 23S in the tangential direction (the SS direction) of the rotation buff 6. Herein, a P direction represents the proceeding direction of the rotation buff 6. The rotation buff 6 is preferably a buff made of material rarely damaging the separator 23S, for example, felt cloth. Specifically, the rotation buff 6 is further preferably attached with a felt cloth 62 of a disc-like shape laminated on a rotary shaft 61, and a surface of the felt cloth 62 is further preferably coated with abrasive grain 63 with roughness of about #100 to #120. Further, the peripheral speed VQ is preferably the maximum speed not to cause tears in the separator 23S.

In this separator separating step S1, the rotation buff 6 rotating at the predetermined peripheral speed VQ is moved forward by only a predetermined distance with frictional contact with the surface 231 of the separator 23S, and then the rotation buff 6 is moved in an axial direction by a width of the buff, and this movement is repeated. Thereby, the separator 23S is extended in the tangential direction (the SS direction) of the rotation buff 6, so that the separator 23S with a predetermined width can be extended along a surface of the boundary face KM with restraining a burden on the active material layer KT2 (KT1) in the vertical direction (an ST direction). Accordingly, separation of the mixture of the active material layer KT2 (KT1) and deformation, breakage, and others of the active material layer KT2 (KT1) can be further reduced. Further, the rotation buff 6 does not stay at a certain position but moves forward in frictional contact with the surface 231 of the separator 23S, thereby restraining increase in a temperature of the active material layer KT2 (KT1) and reducing degradation in the active material layer KT2 (KT1).

Herein, as mentioned above, the surface side of the outermost separator 23S adjacent to the battery case 1 is coated with the adhesive agent at a less amount than that on the rear side. Accordingly, as shown in FIG. 8, after the partial electrode 2XR of a first layer has been disassembled, there is a case that the surface side of the outermost separator 23S of the partial electrode 2XR on a second layer and thereafter is partly attached with the positive active material layer KT1 of the partial electrode 2XR that has been disassembled before the second layer. In this case, in the separator separating step S1, it is preferable that the rotation buff 6 scrapes off all the positive active material layer KT1 attached to the surface side of the separator 23S. Thus, the separator 23S can be evenly extended in the tangential direction (the SS direction) of the rotation buff 6 and the separator 23S and the active material layer KT2 can be assuredly separated at the boundary face KM.

Further, in the method for disassembling the electrode body 2, as shown in FIG. 2, the separator 23 is a resin film 23J formed by extrusion molding, and it is preferable that in the separator separating step S1, the outermost separator 23S is extended in a transverse direction (the TD direction) orthogonal to an extruding direction (the MD direction) of the resin film 23J as shown in FIG. 6. The extrusion-molded resin film 23J tends to extend more in the transverse direction (the TD direction) than in the extruding direction (the MD direction). In the separator separating step S1, the separator 23S is extended in the transverse direction (the TD direction) of the resin film 23J, and thus the separator 23S can be largely extended with a smaller force. Therefore, the separator 23S and the active material layer KT2 (KT1) can be further easily separated along the boundary face KM.

### <Modified Example>

The present embodiment explained in detail above is only an illustration and gives no any limitation to the disclosure. Accordingly, the disclosure may be improved and deformed in various ways without departing from the scope of disclosure.

### Reference Signs List

- 1: Battery case
- 2: Electrode body
- 2X, 2XR: Partial electrode
- 6: Rotation buff
- 10: Power storage device
- 21: Positive electrode body
- 22: Negative electrode body
- 23, 23S, 23N: Separator
- 23J: Resin film
- 21K, 22K: Metal foil
- 231: Surface
- KM: Boundary face
- KT1, KT2: Active material layer
- NP: Extension point
- S1: Separator separating step
- S2: Separator peeling step
- S3: Disassembling step
- VQ: Peripheral speed

## Claims

1. A method for disassembling an electrode body (2) that is formed in a manner that a positive electrode body (21) and a negative electrode body (22), each of which is formed by coating an active material layer (KT1,KT2) on a metal foil (21K,22K), are held by separators (23), respectively, in a stacked and press-fitted state and that is used for a power storage device (10),
the method comprising:
separating (S1) an outermost separator (23 S) of the separators (23) from the active material layer (KT1,KT2) at a boundary face with the active material layer (KT1,KT2) by serially moving an extension point along the boundary face (KM) to extend the outermost separator (23S);
peeling (S2) the outermost separator (23S), which has been separated from the active material layer (KT1,KT2) in separating (S1), from the active material layer (KT1,KT2); and
disassembling (S3) a stacked state of the electrode body (2) in each partial electrode (2XR,2X) including the active material layer (KT1,KT2) from which the outermost separator (23S) has been peeled off in peeling (S2).

2. The method for disassembling the electrode body (2) according to claim 1, wherein separating (S1) the outermost separator (23S) includes moving forward a rotation buff (6) rotating at a predetermined peripheral speed in frictional contact with a surface (231) of the outermost separator (23S) and extending the outermost separator (23S) in a tangential direction of the rotation buff (6).

3. The method for disassembling the electrode body (2) according to claim 1 or 2, wherein
the separator (23) is a resin film (23J) formed by extrusion molding; and
separating (S1) the outermost separator (23S) includes extending the outermost separator (23S) in a transverse direction orthogonal to an extrusion direction of the resin film (23J).

4. The method for disassembling the electrode body (2) according to any one of claims 1 to 3, wherein separating (S1) the outermost separator (23S), peeling (S2) the outermost separator (23S), and disassembling (S3) are performed under no-water-use state and under inert atmosphere.
